# EUROPÄISCHE PATENTSCHRIFT

(11) **EP 0 734 894 B1**
(45) Veröffentlichungstag und Bekanntmachung des Hinweises auf die Patenterteilung: **10.11.1999**
(21) Anmeldenummer: 96111343.8
(22) Anmeldetag: 28.09.1994
(51) Int. Cl.: B60J 7/047

(54) **Aufbau für Personenwagen**
Vehicle body
Carrosserie de véhicule

(30) Priorität: 15.10.1993 DE 4335653
(43) Veröffentlichungstag der Anmeldung: 02.10.1996
(62) Teilanmeldung aus: 94115244.9
(73) Patentinhaber: Dr.Ing.h.c. F. Porsche Aktiengesellschaft, 70435 Stuttgart (DE)
(72) Erfinder: Bayer, Jürgen, 71287 Weissach (DE); Murkett, Stephen, 70839 Gerlingen (DE); Mayer, Johann, 85238 Petershausen (DE); Ulbrich, Thomas, 86916 Kaufering (DE); Danzl, Martin, 80797 München (DE)

(56) Entgegenhaltungen:
- FR-A- 958 347
- GB-A- 2 184 404
- GB-A- 2 251 223

## Beschreibung

Die Erfindung betrifft einen Aufbau für Personenwagen nach dem Oberbegriff des Patentanspruchs 1.

In der gattungsbildenden US-A-4 801 174 wird ein transparentes Dach für ein Kraftfahrzeug behandelt, bei dem ein bewegliches Dachteil unter ein hinteres Aufbauteil verschiebbar ausgebildet ist.

Es ist ein Personenwagen mit einem Aufsatz bekannt, DE 822 658, der ein geschlossenes Dach umfaßt, was die freie Sicht der Insassen beeinträchtigt. Sinngemäß gilt dies für den Coupè-Aufsatz gem. der DE 11 31 528.

Darüber hinaus ist eine Kraftfahrzeug-Dachkonstruktion bekannt, DE 34 39 880, bei der ein beweglicher Dachabschnitt in eine Aufbauöffnung eingesetzt ist.

Aufgabe der Erfindung ist es, einen Aufbau-Aufsatz eines Personenwagens so zu gestalten, daß die Sicht der Insassen ins Freie verbessert wird und ein relativ großer Dachbereich zu öffnen ist.

Erfindungsgemäß wird diese Aufgabe durch die kennzeichnenden Merkmale des Patentanspruchs gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß der Aufbau mit seinen Dachabschnitten, die aus Glas bestehen können und teilweise zu öffnen sind, eine zweckgerichtete Kombination aus geschlossenem und offenem Aufbau bilden. Dabei ist nicht nur die Sicht für die Insassen nach oben ausgezeichnet z.B. um Vorgänge und Landschaftsbilder über dem Dach zu beobachten, sondern es wird durch die beweglichen Dachabschnitte eine gute Be- und Entlüftung des Fahrgastraumes erzielt bzw. die Insassen können, ähnlich wie an einem offenen Fahrzeug, die sich ihnen bietende Umgebung wahrnehmen.

Die beweglichen Dachabschnitte sind nach Art eines Schiebedaches aufgebaut, wobei der erste Dachabschnitt ein Windabweiser ist und der zweite Dachabschnitt das eigentliche Schiebedach bildet. Letzterer ist mittels geeigneter Kinematik und Führungen unter den dritten Dachabschnitt verstellbar ausgebildet.

Der Aufbau besteht aus leicht produzierbaren Rahmen und Trägern, die aus Stahl, Kunststoff oder Leichtmetall hergestellt sein können. Der dritte Dachabschnitt, er ist wie die anderen Dachabschnitte ein Glasteil, und die hinteren Seitenfenster sind in Öffnungen des Aufbaus eingesetzt und durch Kleben befestigt. Durch diese Bauweise hat der Aufbau ausreichende Steifigkeit bei vertretbarem Gewicht.

Schließlich kann der Aufbau mit seinen wesentlichen Teilen ein vorgefertigtes Modul sein, der Aufbau kann eine Cabrio-Rahmenstruktur aufweisen, durch Schraubverbindungen am Aufbau gehalten ist. Dadurch kann das Modul ohne nennenswerte Änderungen an einem Cabrio-Aufbau befestigt werden, so daß mit relativ geringem Aufwand eine weitere Typenvariante geschaffen ist.

In der Zeichnung wird ein Ausführungsbeispiel der Erfindung gezeigt, das nachstehend näher beschrieben ist.

Es zeigt
- Fig. 1: eine Seitenansicht eines Personenwagens mit dem erfindungsgemäßen Aufbau,
- Fig. 2: eine Teilansicht der Fig. 1,

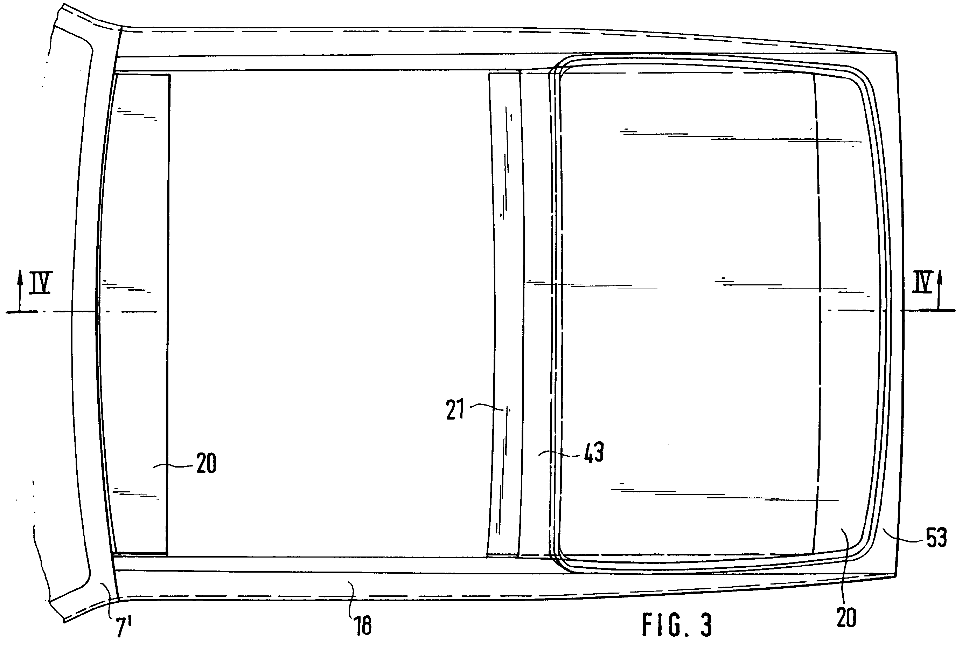

- Fig. 3: eine Ansicht in Pfeilrichtung A der Fig. 1,

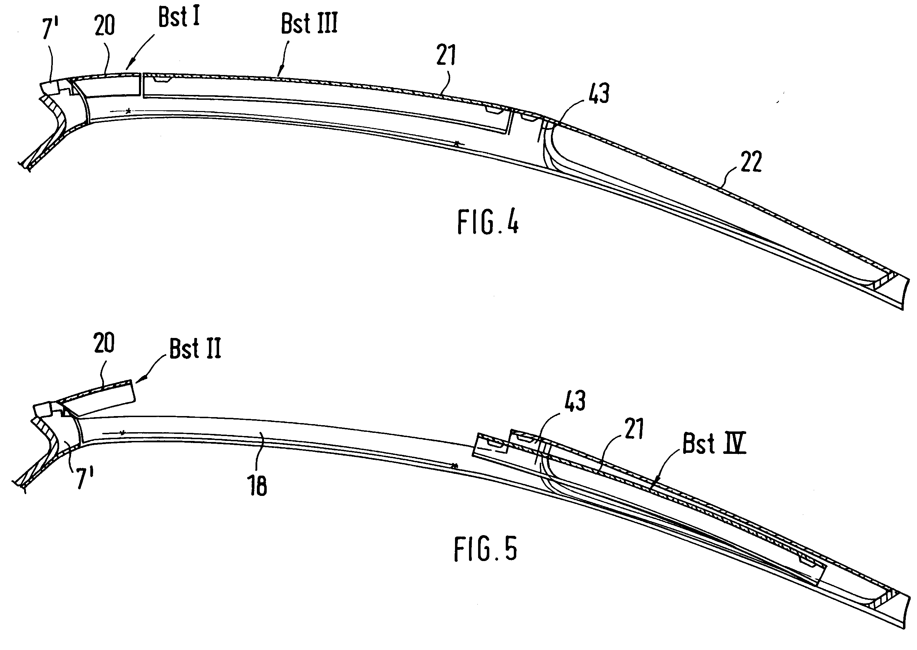

- Fig. 4: einen Schnitt nach der Linie IV-IV der Fig. 3,
- Fig. 5: eine Ansicht entsprechend Fig. 4,
- Fig. 6: einen Schnitt nach der Linie VI-VI der Fig. 1 in größerem Maßstab,
- Fig. 7: einen Schnitt nach der Linie VII-VII der Fig. 1 in größerem Maßstab,
- Fig. 8: eine Einzelheit X der Fig. 1 in größerem Maßstab,
- Fig. 9: eine Einzelheit Y der Fig. 1 in größerem Maßstab.

Der Personenwagen 1 umfaßt einen Aufbau 2, der von Rädern 3 getragen wird. Der Aufbau 2 wird durch einen Grundkörper 4 mit einer Windschutzscheibe 5 und einer Gürtellinie 6 gebildet. Der Grundkörper 4 ist mit einem als oberer Aufbau 7 ausgebildeten Aufsatz versehen, der an einen oberen Windschutzscheibenrahmen 7' und die Gürtellinie 6 angeschlossen ist, und mit einem Dach 8 einen Fahrgastraum 9 abdeckt. Eine Dachlinie 10, die sich etwa entlang der Mittellängsebene des Personenwagens erstreckt, verläuft zwischen Windschutzscheibenrahmen 7' und einer Heckklappe 11 in einem entgegen der Fahrtrichtung B abfallenden, jedoch durchgängigen Bogen, so daß der Aufbau 2 die Form eines Coupés mit Fließheck aufweist.

Der Grundkörper 4 ist jeweils auf der Fahrzeuglängsseite mit einer Tür 12 versehen, die einen Türkörper 13, ein Dreiecksfenster 14 und ein verschiebbares Seitenfenster 15 aufweist, dessen hintere Türscheibenbegrenzung 16 zwar relativ aufrecht, jedoch entgegen der Fahrtrichtung B leicht geneigt ist. Ein weiteres Seitenfenster 17 ist hinter dem türseitigen Seitenfenster 15 am Aufsatz 6 angeordnet. Das Seitenfenster 17 besitzt dreieckige Grundformen und verjüngt sich entgegen der Fahrtrichtung B.

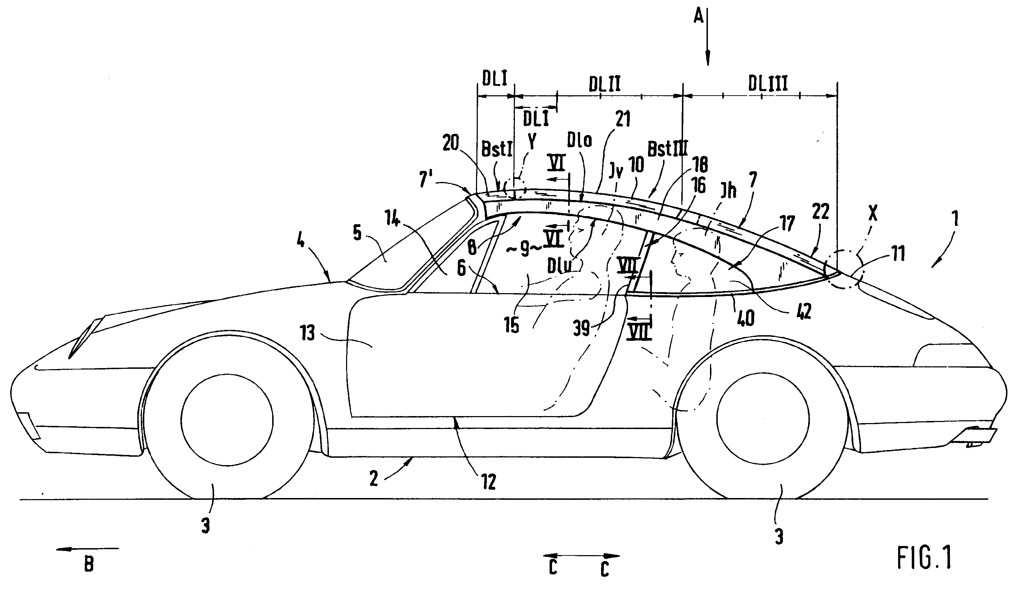

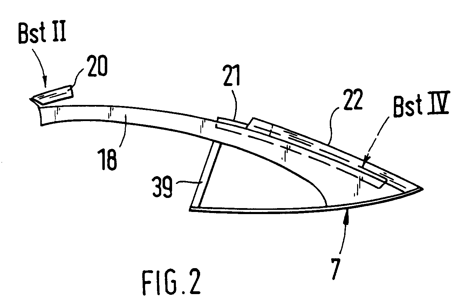

Der Aufbau 7 besitzt die Seitenfenster 15, 17 begrenzende seitliche Dachrahmen 18, zwischen denen - in Fahrzeuglängsrichtung C-C gesehen - hintereinanderliegend ein erster Dachabschnitt 20, ein zweiter Dachabschnitt 21 und ein dritter Dachabschnitt 22 vorgesehen sind. Der erste Dachabschnitt 20 ist zwischen den Betriebsstellungen Bst I und Bst II - Fig. 1 und 2 - winkelbeweglich ausgebildet und wirkt in seiner aufgestellten Betriebsstellung Bst II als Windabweiser, der an dem Dachrahmen 18 oder dem Windschutzscheibenrahmen 7' scharniert sein kann. Der zweite Dachabschnitt 21 ist nach Art eines Schiebedaches längsbeweglich - Betriebsstellungen Bst III und Bst IV - ausgebildet derart, daß er sich unter den dritten Dachabschnitt 22 verschieben läßt, und zwar in die Betriebsstellung Bst IV, wobei der dritte Dachabschnitt 22 fest in den Aufbau 7 eingesetzt ist.

Die Dachabschnitte 20, 21 und 22 sind in der Konstruktionslage oder Grundstellung, d.h. im geschlossenen Zustand oberflächenbündig zueinander angeordnet, wobei zwischen den Dachabschnitten 20 und 21 Dichtkörper 23 vorgesehen sind (Fig. 9). In diesem Bereich ist an der Unterseite zwischen Dachabschnitt 21 eine Schiene 24 vorgesehen, die mit einem Steg 25 den ersten Dachabschnitt 20 untergreift, wobei zwischen Steg 25 und dem ersten Dachabschnitt 20 eine Dichtung 26 wirksam ist.

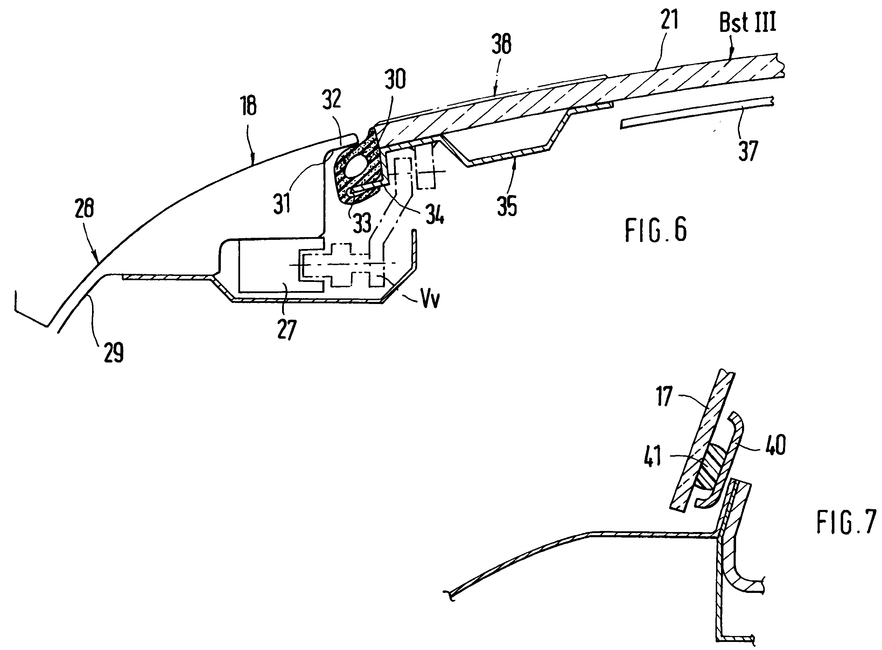

Um den zweiten Dachabschnitt 21 aus der Betriebsstellung Bst III in die Betriebsstellung Bst IV zu bewegen, dient eine Führungsschiene 27 (Fig, 6), die am Dachrahmen 18 angebracht ist. Zwischen der Führungsschiene 27 und dem zweiten Dachabschnitt 21 sind eine oder mehrere Verbindungsvorrichtungen Vv vorgesehen. In Fig. 6 ist dargestellt, daß der Dachrahmen 18 eine Außenschale 28 und eine Innenschale 29 umfaßt, wobei die Führungsschiene 27 an der Innenschale 29 gehalten ist. Der zweite Dachabschnitt 21 wirkt unter Vermittlung eines Dichtkörpers 30 mit der Innenseite 31 eines Flansches 32 zusammen, der durch die Außenschale 28 und die Innenschale 29 gebildet ist. Der Dichtkörper 30 umgreift mit einer Aufnahme 33 einen Flansch 34 eines profilierten Trägers 35, der an der Unterseite 36 des zweiten Dachabschnittes 21 durch geeignete Verfahren befestigt und umlaufend angebracht zur Versteifung des relativ großflächigen Dachabschnittes 21 dient. Die Verbindungsvorrichtung Vv umfaßt ein Hebelwerk, das zur Bewegung des Dachabschnittes 21 einerseits in Fahrzeugslängsrichtung C-C und andererseits in die Betriebsstellung Bst IV dient.

Zur Sicherstellung einer guten Sicht für die Insassen des Personenwagens 1 sind sämtliche Dachabschnitte 20, 21 und 22 aus Sichtglas hergestellt; dabei kann es sich um mehrschichtiges Sonnenschutzglas handeln. Außerdem ist auch phototropes Glas denkbar. Darüber hinaus kann an der Innenseite der Dachabschnitte 20, 21 eine Jalousie 37 (Fig. 6) vorgesehen werden, die z.B. bei Stillstand des Fahrzeuges in eine geschlossene oder Abdeck-Position gebracht werden kann. Auch besteht die Möglichkeit, an der Außenseite des Dachabschnittes 21 im Bereich des Trägers 35 bei 38 das Glas z.B. schwarz einzufärben, wodurch zum einen der Träger 35 verdeckt wird und zum anderen eigentümliche ästhetische Effekte erzielbar sind. Die Einfärbung kann an allen Dachabschnitten umlaufend als Rand vorgesehen sein.

Günstige Verhältnisse für die Länge der Dachabschnitte 20, 21, 22 - in Fahrzeuglängsrichtung C-C gesehen - bei dem Personenwagen des vorliegenden Ausführungsbeispiel ergeben sich, wenn der zweite Dachabschnitt 21 bis hinter die Türscheibenbegrenzung 16 bzw. einen Bereich oberhalb eines Fond-Insassen Ih geführt wird, der hinter einem Front-Insassen Iv sitzt. Dabei ist die Länge DL II und DL III des zweiten Dachabschnittes 21 und des dritten Dachabschnittes 22 etwa vier Mal größer als die Länge DL I des ersten Dachabschnittes 20 (Fig. 1). Ferner können die Dachabschnitte 20 und 21 möglichst breit gestaltet sein, was eine relativ schmale und leichte Konfiguration der Dachrahmen zur Folge hat.

Vom Dachrahmen 18, der die Dachabschnitte 20, 21, 22 begrenzt, weggeführt, und zwar im Bereich der hinteren Türscheibenbegrenzung 16 ist eine Säule 39, die in einen oberhalb der Gürtellinie 6 verlaufenden Stützträger 40 des Aufbaus 7 mündet (Fig. 7), der entlang der Gürtellinie 6 zwischen den gegenüberliegenden Säulen 39 verläuft. Der Stützträger 40 ist im Querschnitt U-förmig ausgebildet und hält mittels eines Klebekörpers 41 das Seitenfenster 17 (Fig. 7) in Lage. Das Seitenfenster 17 ist also in eine Öffnung 42 eingesetzt, die vom seitlichen Dachrahmen 18 der Säule 39 und dem Stützträger 40 begrenzt wird.

Die gegenüberliegenden Dachrahmen 18, die sich gemäß Fig. 1 entgegen Fahrtrichtung B im Querschnitt erweitern, was durch die Linien DLo und DLu verdeutlicht wird, sind im Bereich des dritten Dachabschnittes 22, und zwar benachbart dem zweiten Dachabschnitt 21 mit einem Querträger 43 verbunden, auf dem der dritte Dachabschnitt 22 aufliegt; er ist durch Kleben am Aufbau 7 in Lage gehalten; die Dachlinie 10 und die Linie DLo verlaufen in etwa mit gleichem Abstand zueinander.

Der Aufbau 7 bildet mit den Dachabschnitten 20, 21, 22 den seitlichen Trägern 18, 19, den Säulen 39, dem Querträger 43, dem Stützträger 40 und der hinteren Seitenfenster 17 ein vorgefertigtes Modul, das mit dem Aufbau 2 bzw. Grundkörper 4 durch eine oder mehrere Schraubverbindungen 44 verbunden ist.

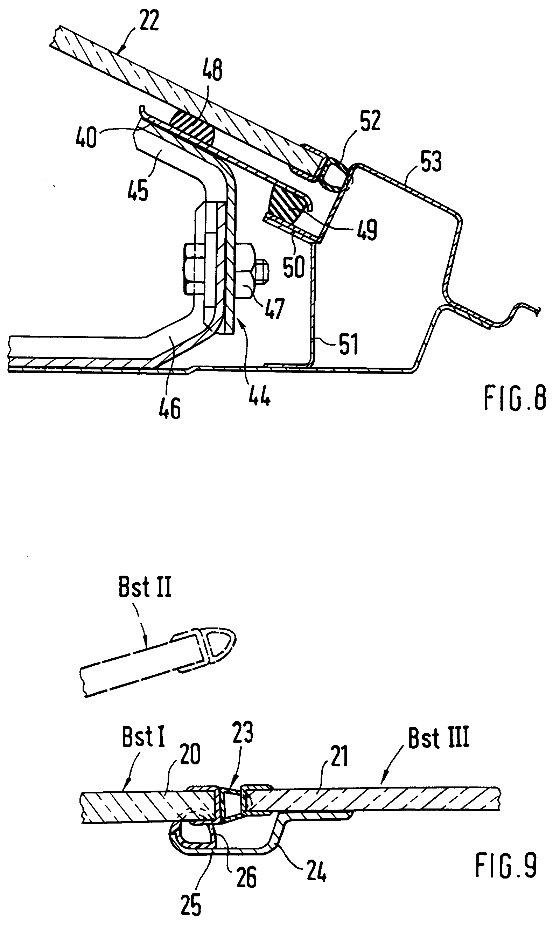

Ein Ausführungsbeispiel einer Schraubverbindung ist in Fig. 8 dargestellt. Danach ist der Stützträger 40 mit einem Winkel 45 versehen, der an einen weiteren Winkel 46 des Aufbaues 2 herangeführt ist. Zwischen den beiden Winkeln 45, 46 ist eine Schraube 47 vorgesehen. Der Stützträger 40 ist darüber hinaus zum einen über einen Klebekörper 48 mit dem dritten Dachabschnitt 22 verbunden und zum anderen mittels einer Dichtung 49 an einen Flansch 50 eines inneren Querträgers 51 des Aufbaues 2 herangeführt. Schließlich schließt der dritte Dachabschnitt 22 mit einem Dichtkörper 52 an einen äußeren Querträger 53 an.

## Patentansprüche

1. Aufbau (2) eines Personenwagens (1) mit einem Dach (8), das oberhalb einer Gürtellinie (6) einen Fahrgastraum (9) abdeckt, wobei das Dach (8) erste und zweite Dachabschnitte (20, 21) umfaßt, wovon der erste Dachabschnitt (20) an einen Windschutzscheibenrahmen (7') angrenzt sowie winkelbeweglich ausgestaltet ist und der zweite Dachabschnitt (21) in Fahrzeuglängsrichtung (CC) beweglich ausgebildet ist, **dadurch gekennzeichnet**, daß
- der erste Dachabschnitt (20) ein Windabweiser ist und der zweite Dachabschnitt (21) nach Art eines Schiebedaches unter einen dritten Dachabschnitt (22) bewegbar ausgebildet ist, wobei die Dachabschnitte hintereinanderliegend angeordnet sind,
- zumindest der erste und der zweite Dachabschnitt (20,21) aus Glas bestehen,
- die Dachabschnitte im geschlossenen Zustand oberflächenbündig zueinander angeordnet sind, und
- an der Innenseite des Dachs (8), z.B. im Bereich des ersten und des zweiten Dachabschnitts (20, 21), eine bewegliche Jalousie (37) vorgesehen ist.

2. Aufbau nach Anspruch 1, bei dem der dritte Dachabschnitt (22) aus Glas besteht.

3. Aufbau nach Anspruch 1, bei dem der zweite Dachabschnitt (21) entlang von benachbart von seitlichen Dachrahmen (18, 19) des Aufbaues (2) angebrachten Führungsschienen (27) bewegbar ist.

4. Aufbau nach Anspruch 1, bei dem zumindest der zweite Dachabschnitt (21) aus mehrschichtigem Glas besteht.

5. Aufbau nach Anspruch 1, bei dem die Dachabschnitte (20, 21) aus Sonnenschutzglas bestehen.

6. Aufbau nach Anspruch 1, bei dem zumindest an der Unterseite (36) des zweiten Dachabschnitts (21) eine Schiene (24) vorgesehen ist, die mit einem Steg (25) den ersten Dachabschnitt (20) untergreift.

7. Aufbau nach Anspruch 1, bei dem zwischen den Dachabschnitten (20, 21) Dichtkörper (23) vorgesehen sind.

8. Aufbau nach Anspruch 6, bei dem zwischen dem Steg (25) und dem ersten Dachabschnitt (20) eine Dichtung (25) wirksam ist.

9. Aufbau nach einem oder mehreren der vorangehenden Ansprüche, bei dem zumindest der zweite Dachabschnitt (21) zur Bildung relativ schmaler Dachrahmen (18, 19) möglichst breit gestaltet ist.

10. Aufbau nach Anspruch 1, bei dem der zweite Dachabschnitt (21) an der Unterseite (36) einen profilierten Träger (35) zu seiner Verstärkung aufweist, wobei der Träger (35) durch geeignete Verfahren befestigt ist.

11. Aufbau nach Anspruch 10, bei dem der Träger (35) umlaufend am zweiten Dachabschnitt (21) vorgesehen ist.

12. Aufbau nach einem oder mehreren der vorangehenden Ansprüche, bei dem das Glas des zweiten Dachabschnitts (21) im Bereich des Trägers (35) eine Einfärbung (38) aufweist.

13. Aufbau nach einem oder mehreren der vorangehenden Ansprüche, bei dem das Glas zumindest des ersten und zweiten Dachabschnitts (20, 21) örtlich mit einer Einfärbung (38) versehen ist.

14. Aufbau nach Anspruch 13, bei dem die Einfärbung (38) als Rand der Dachabschnitte (20, 21, 22) ausgebildet ist.

15. Aufbau nach Anspruch 1, bei dem die Länge (DL II) des zweiten Dachabschnittes (21) ein Vielfaches größer ist als die Länge (DL I) des ersten Dachabschnittes (20).

16. Aufbau nach einem oder mehreren der vorangehenden Ansprüche, bei dem die Länge (DL II und DL III) des zweiten und des dritten Dachabschnittes (21, 22) in etwa gleich groß ist.

17. Aufbau nach einem oder mehreren der vorangehenden Ansprüche, bei dem das Dach (8) Seitenfenster (15, 17) begrenzende seitliche Dachrahmen (18, 19) umfaßt und die Dachabschnitte (20, 21) zur Bildung relativ schmaler Dachrahmen (18, 19) möglichst breit gestaltet sind.

18. Aufbau nach Anspruch 17, bei dem das Dach (8) eine sich etwa entlang der Mittellängsebene des Personenwagens (1) als Bogen zwischen Windschutzscheibenrahmen (7') und Heck (11) verlaufende Dachlinie (10) aufweist.

19. Aufbau nach einem oder mehreren der vorangehenden Ansprüche, bei dem
- die Seitenfenster (15, 16) durch ein erstes verschiebbares Seitenfenster (15) und ein zweites, eine dreieckige Grundform besitzendes, hinter dem ersten Seitenfenster (15) angebrachtes Seitenfenster (17) gebildet werden,
- alle Dachabschnitte (20, 21, 22) zur Bildung relativ schmaler Dachrahmen (18, 19) möglichst breit gestaltet sind,
- an der Innenseite des Dachs (8) im Bereich des ersten und des zweiten Dach-abschnitts (20, 21) die verstellbare Jalousie (37) wirksam ist, und
- die Länge (DL II) und (DL III) des zweiten und des dritten Dachabschnittes (21, 22) ein Vielfaches größer ist als die Länge (DL I) des ersten Dachabschnittes (20).

20. Aufbau nach Anspruch 19, bei dem alle Dachabschnitte (21, 22, 23) aus Sonnenschutzglas bestehen.

21. Aufbau nach einem oder mehreren der vorangehenden Ansprüche, bei dem der Aufbau (2) einen als oberen Aufbau (7) ausgebildeten Aufsatz mit Seitenfenster (15, 16) begrenzenden seitlichen Dachrahmen (18, 19) umfaßt, zwischen denen sich der erste als Windabweiser ausgebildete Dachabschnitt (20) und der daran anschließende zweite Dachabschnitt (21), der nach Art eines Schiebedachs unter den dritten Dachabschnitt (22) verschiebbar ausgebildet ist, erstrecken.

22. Aufbau nach Anspruch 21, dadurch gekennzeichnet, daß der Aufsatz die Dachabschnitte (20, 21, 22) begrenzende seitliche Dachrahmen (18) umfaßt, von denen im Bereich einer hinteren Türscheibenbegrenzung (16) Säulen (39) weggeführt sind, die in einen oberhalb der Gürtellinien (6) verlaufenden Stützträger (40) münden.

23. Aufbau nach Anspruch 22, bei dem - entgegen der Fahrtrichtung (B) gesehen - hinter der hinteren Türscheibenbegrenzung (16) die Säule (39), der seitliche Dachrahmen (18) und der Stützträger (40) eine Öffnung (42) begrenzen, in die das hintere Seitenfenster (17) eingesetzt ist.

24. Aufbau nach einem oder mehreren der vorangehenden Ansprüche, dadurch gekennzeichnet, daß der dritte Dachabschnitt (22) benachbart dem zweiten Dachabschnitt (21) auf einem sich zwischen den seitlichen Dachrahmen (18) erstreckenden Querträger (42) aufliegt.

25. Aufbau nach einem oder mehreren der vorangehenden Ansprüche 21 bis 24, bei dem der dritte Dachabschnitt (22) und die Seitenfenster (17) durch Kleben mit dem Aufsatz verbunden ist.

26. Aufbau nach einem oder mehreren der vorangehenden Ansprüche 21 bis 25, bei dem der Aufsatz mit den Dachabschnitten (20, 21, 22), den seitlichen Trägern (18, 19), den Säulen (39), dem Querträger (43), dem Stützträger (40) und dem Seitenfenster (17) ein vorgefertigtes Modul ist.

27. Aufbau nach Anspruch 21, bei dem der Aufsatz durch eine oder mehrere Schraubverbindungen (44) am Aufbau (2) gehalten ist.

## Claims

1. A body (2) of a passenger car (1) with a roof (8) covering a passenger compartment (9) above a waist line (6), wherein the roof (8) comprises first ad second portions (20, 21), of which the first roof portion (20) is adjacent to a windscreen frame (7') and is constructed to be movable in an angular manner and the second roof portion (21) is constructed to be movable in the longitudinal direction (**CC**) of the vehicle, **characterized in that**
- the first roof portion (20) is a wind deflector and the second roof portion (21) is constructed to be movable in the manner of a sliding roof below a third roof portion (22), wherein the roof portions are arranged one behind the other,
- at least the first and the second roof portions (20, 21) consist of glass,
- the roof portions are arranged with the surfaces thereof in mutual alignment in the closed state, and
- a movable blind (37) is provided on the inside of the roof (8), e.g. in the region of the first and the second roof portions (20, 21).

2. A body according to Claim 1, in which the third roof portion (22) consists of glass.

3. A body according to Claim 1, in which the second roof portion (21) is movable along guide rails (27) attached adjacent to lateral roof frames (18, 19) of the body (2).

4. A body according to Claim 1, in which at least the second roof portion (21) consists of multiple-layer glass.

5. A body according to Claim 1, in which the roof portions (20, 21) consist of sun-protective glass.

6. A body according to Claim 1, in which a rail (24) engaging under the first roof portion (20) with a web (25) is provided at least on the underside (36) of the second roof portion (21).

7. A body according to Claim 1, in which sealing members (23) are provided between the roof portions (20, 21).

8. A body according to Claim 6, in which a seal (25) [*sic - recte* (26)] is effective between the web (25) and the first roof portion (20).

9. A body according to one or more of the preceding Claims, in which at least the second roof portion (21) is made as wide as possible in order to form relatively narrow roof frames (18, 19).

10. A body according to Claim 1, in which the underside (36) of the second roof portion (21) is provided with a profiled support (35) for the reinforcement thereof, wherein the support (35) is secured by suitable methods.

11. A body according to Claim 10, in which the support (35) is provided on a continuous manner on the second roof portion (21).

12. A body according to one or more of the preceding Claims, in which the glass of the second roof portion (21) is provided with a coloured portion (38) in the region of the support (35).

13. A body according to one or more of the preceding Claims, in which the glass of at least the first and the second roof portions (20, 21) is provided locally with a coloured portion (38).

14. A body according to Claim 13, in which the coloured portion (38) is formed as the edge of the roof portions (20, 21, 22).

15. A body according to Claim 1, in which the length (**DL II**) of the second roof portion (21) is greater by a multiple than the length (**DL I**) of the first roof portion (20).

16. A body according to one or more of the preceding Claims, in which the length (**DL II** and **DL III**) of the second and the third roof portions (21, 22) is substantially equal.

17. A body according to one or more of the preceding Claims, in which the roof (8) comprises lateral roof frames (18, 19) bounding side windows (15, 17), and the roof portions (20, 21) are made as wide as possible in order to form relatively narrow roof frames (18, 19).

18. A body according to Claim 17, in which the roof (8) has a roof line (10) extending substantially along the median longitudinal plane of the passenger car (1) as an arc between the windscreen frame (7') and the tail (11).

19. A body according to one or more of the preceding Claims, in which
- the side windows (15, 16) are formed by a first slidable side window (15) and a second side window (17) having a triangular basic shape and situated behind the first side window (15),
- all the roof portions (20, 21, 22) are made as wide as possible in order to form relatively narrow roof frames (18, 19),
- the adjustable blind (37) is effective on the inside of the roof (8) in the region of the first and the second roof portions (20, 21), and
- the length (**DL II**) and (**DL III**) of the second and the third roof portions (21, 22) is greater by a multiple than the length (**DL I**) of the first roof portion (20).

20. A body according to Claim 20, in which all the roof portions (21, 22, 23) [*sic - recte* (20, 21, 22)] consist of sun-protective glass.

21. A body according to one or more of the preceding Claims, in which the body (2) comprises lateral roof frames (18, 19) bounding a top constructed in the form of an upper structure (7) with side windows (15, 16), and the first roof portion (20) constructed in the form of a wind deflector and the second roof portion (21) adjacent thereto and constructed to be slidable below the third roof portion (22) in the manner of a sliding roof extend between the said lateral roof frames (18, 19).

22. A body according to Claim 22, **characterized in that** the top comprises lateral roof frames (18) bounding the roof portions (20, 21, 22), and columns (39), which open into a supporting holder (40) extending above the waist lines (6), are directed away from the said lateral roof frames (18) in the region of a rear door-window boundary (16).

23. A body according to Claim 23, in which behind the rear door-window boundary (16) - as viewed contrary to the direction of travel (**B**) - the column (39), the lateral roof frame (18) and the supporting holder (40) bound an opening (42) into which the rear side window (17) is inserted.

24. A body according to one or more of the preceding Claims, **characterized in that** adjacent to the second roof portion (21) the third roof portion (22) rests on a transverse support (42) extending between the lateral roof frames (18).

25. A body according to one or more of the preceding Claims 22 to 25, in which the third roof portion (22) and the side windows (17) [are] joined to the top by adhesion.

26. A body according to one or more of the preceding Claims 22 to 26, in which the top with the roof portions (20, 21, 22), the lateral supports (18, 19), the columns (39), the transverse support (43), the supporting holder (40) and the side window (17) is a pre-fabricated module.

27. A body according to Claim 22, in which the top is held on the body (2) by one or more bolt fastenings (44).

## Revendications

1. Carrosserie (2) d'une voiture de tourisme (1) présentant un toit (8), qui recouvre un habitacle (9), au-dessus d'une ligne médiane (6), le toit (8) comportant des premières parties (20) et des deuxièmes parties (21), la première partie de toit (20) étant adjacente à un cadre de pare-brise (7') et étant réalisée mobile angulairement, et la deuxième partie de toit (21) étant réalisée mobile dans la direction longitudinale (CC) du véhicule, caractérisée en ce que
- la première partie de toit (20) est un déflecteur de vent et la deuxième partie de toit (21) est réalisée déplaçable sous une troisième partie de toit (22), à la manière d'un toit coulissant, les parties du toit étant disposées les unes derrière les autres,
- au moins la première et la deuxième parties de toit (20, 21) sont en verre,
- les parties de toit à l'état fermé sont disposées avec leurs surfaces alignées, et
- un store 37 mobile est prévu sur la face intérieure du toit (8), par exemple dans la région de la première et de la deuxième parties de toit (20, 21).

2. Carrosserie selon la revendication 1, dans laquelle la troisième partie de toit (22) est en verre.

3. Carrosserie selon la revendication 1, dans laquelle la deuxième partie de toit (21) est déplaçable le long de glissières (27) montées au voisinage de cadres de toit (18, 19) latéraux de la carrosserie (2).

4. Carrosserie selon la revendication 1, dans laquelle au moins la deuxième partie de toit (21) est en verre à plusieurs couches.

5. Carrosserie selon la revendication 1, dans laquelle les parties de toit (20, 21) sont en verre de protection solaire.

6. Carrosserie selon la revendication 1, dans laquelle au moins sur la face inférieure (36) de la deuxième partie de toit (21) est prévu un rail (24) dont une âme (25) passe sous la première partie de toit (20).

7. Carrosserie selon la revendication 1, dans laquelle des corps d'étanchéité (23) sont prévus entre les parties de toit (20, 21).

8. Carrosserie selon la revendication 6, dans laquelle une étanchéité (25) opère entre l'âme (25) et la première partie de toit (20).

9. Carrosserie selon une ou plusieurs des revendications précédentes, dans laquelle au moins la deuxième partie de toit (21) est aussi large que possible pour former des cadres de toit (18, 19) relativement étroits.

10. Carrosserie selon la revendication 1, dans laquelle la deuxième partie de toit (21) présente sur la face inférieure (36) un support profilé (35) pour son renfort, le support (35) étant fixé par des procédés appropriés.

11. Carrosserie selon la revendication 10, dans laquelle le support (35) est prévu périphériquement sur la deuxième partie de toit (21).

12. Carrosserie selon une ou plusieurs des revendications précédentes, dans laquelle le verre de la deuxième partie de toit (21) est teinté (38) dans la région du support (35).

13. Carrosserie selon une ou plusieurs des revendications précédentes, dans laquelle le verre au moins de la première et de la deuxième parties de toit (20, 21) est pourvu localement d'une teinture (38).

14. Carrosserie selon la revendication 13, dans laquelle la teinture (38) est réalisée en tant que bordure des parties de toit (20, 21, 22).

15. Carrosserie selon la revendication 1, dans laquelle la longueur (DLII) de la deuxième partie de toit (21) est plusieurs fois supérieure à la longueur (DLI) de la première partie de toit (20).

16. Carrosserie selon une ou plusieurs des revendications précédentes, dans laquelle la longueur (DLII et DLIII) de la deuxième et de la troisième parties de toit (20, 21) sont à peut près identiques.

17. Carrosserie selon une ou plusieurs des revendications précédentes, dans laquelle le toit (8) comprend des cadres de toit (18, 19) latéraux délimitant des fenêtres latérales (15, 17) et les parties de toit (20, 21) sont aussi larges que possible pour former des cadres de toit (18, 19) relativement étroits.

18. Carrosserie selon la revendication 17, dans laquelle le toit (8) présente une ligne de toit (10) s'étendant à peu près le long du plan médian longitudinal de la voiture de tourisme (1), en arc, entre le cadre de pare-brise (7') et l'arrière (11).

19. Carrosserie selon une ou plusieurs des revendications précédentes, dans laquelle
- les fenêtres latérales (15, 16) sont formées par une première fenêtre latérale (15) coulissante et une deuxième fenêtre latérale (17) présentant une forme de base triangulaire, montée derrière la première fenêtre latérale (15),
- toutes les parties de toit (20, 21, 22) sont aussi larges que possible pour former des cadres de toit (18, 19) relativement étroits,
- sur la face inférieure du toit (8), dans la région de la première partie et de la deuxième partie de toit (20, 21) opère le store (37) réglable, et
- la longueur (DLII) et la longueur (DLIII) de la deuxième et de la troisième parties de toit (21, 22) sont plusieurs fois supérieures à la longueur (DLI) de la première partie de toit (20).

20. Carrosserie selon la revendication 19, dans laquelle toutes les parties de toit (21, 22, 23) sont en verre de protection solaire.

21. Carrosserie selon une ou plusieurs des revendications précédentes, dans laquelle la carrosserie (2) comprend un module de toit rigide, réalisé en tant que partie supérieur de la carrosserie (7), avec des cadres de toit (18, 19) latéraux délimitant des fenêtres latérales (15, 16), cadres entre lesquels s'étendent la première partie de toit (20) réalisée en tant que déflecteur de vent et la deuxième partie de toit (21) se raccordant à la première, qui est réalisée de manière à pouvoir coulisser sous la troisième partie de toit (22), à la manière d'un toit coulissant.

22. Carrosserie selon la revendication 21, caractérisée en ce que le module de toit rigide comprend les cadres de toit (18) latéraux délimitant les parties de toit (20, 21, 22) desquels partent, dans la région d'une délimitation de vitre de portière (16) arrière, des montants (39) qui débouchent dans un support d'appui (40) s'étendant au-dessus des lignes médianes (6).

23. Carrosserie selon la revendication 22, dans laquelle derrière - vu dans le sens contraire au sens de marche B - la délimitation de vitre de portière arrière (16), le montant (39), le cadre de toit latéral (18) et le support d'appui (40) délimitent une ouverture (42), dans laquelle est insérée la fenêtre latérale arrière (17).

24. Carrosserie selon une ou plusieurs des revendications précédentes, caractérisée en ce que la troisième partie de toit (22) repose, au voisinage de la deuxième partie de toit (21), sur une traverse (42) s'étendant entre les cadres de toit (18) latéraux.

25. Carrosserie selon une ou plusieurs des revendications 21 à 24 précédentes, dans laquelle la troisième partie de toit (22) et les fenêtres latérales (17) sont assemblées par collage avec le module de toit rigide.

26. Carrosserie selon une ou plusieurs des revendications 21 à 25 précédentes, dans laquelle le module de toit rigide avec les parties de toit (20, 21, 22), les supports latéraux (18, 19), les montants (39), la traverse (43), le support d'appui (40) et la fenêtre latérale (17), constitue un module préfabriqué.

27. Carrosserie selon la revendication 21, dans laquelle le module de toit rigide est maintenu sur la carrosserie (2) par un ou plusieurs assemblage vissés (44).
